(19) Europäisches Patentamt / European Patent Office / Office européen des brevets

(11) **EP 2 966 653 B1**

(12) **FASCICULE DE BREVET EUROPEEN**

(45) Date de publication et mention
de la délivrance du brevet:
**07.06.2017 Bulletin 2017/23**

(51) Int Cl.:
*H01B 11/22* *(2006.01)* *H01B 11/18* *(2006.01)*
*H04W 28/12* *(2009.01)*

(21) Numéro de dépôt: **15175877.8**

(22) Date de dépôt: **08.07.2015**

(54) **CABLE POUR RESEAU RESIDENTIEL ET INSTALLATION DE RESEAU RESIDENTIEL ASSOCIEE**

KABEL FÜR HEIM-NETZWERK, UND ENTSPRECHENDE HEIM-NETZWERK-ANLAGE

CABLE FOR RESIDENTIAL NETWORK AND INSTALLATION OF ASSOCIATED RESIDENTIAL NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2014 FR 1456586**

(43) Date de publication de la demande:
**13.01.2016 Bulletin 2016/02**

(73) Titulaire: **ACOME, Société Coopérative et Participative,
Société Anonyme coopérative de production à capital variable
75014 Paris (FR)**

(72) Inventeur: **CANEPA, Christophe
35133 JAVENE (FR)**

(74) Mandataire: **Regimbeau
20, rue de Chazelles
75847 Paris Cedex 17 (FR)**

(56) Documents cités:
**FR-A1- 2 777 689 GB-A- 2 244 848
US-A1- 2006 143 663 US-A1- 2012 321 305**

## Description

### DOMAINE DE L'INVENTION

L'invention concerne un câble pour réseau local et une installation de réseau local incorporant un tel câble.

### ETAT DE LA TECHNIQUE

Afin d'offrir de multiples services combinant la voix, la vidéo et les services multimédia, les réseaux de communication locaux doivent présenter des capacités de transmission de données toujours plus importantes.

L'augmentation des capacités de transmission passe par l'augmentation des fréquences porteuses utilisées pour la transmission des données sans fil (via le protocole WiFi par exemple).

Le protocole WiFi permet de transmettre des données sans fil entre un point de connexion (tel que par exemple un terminal fixe d'abonné appelé « box ») relié à un réseau de communication et un terminal utilisateur (tel que par exemple un ordinateur ou tout autre objet communicant).

Les normes WiFi 802.11 permettent une diffusion des données dans un bâtiment sur les bandes de fréquences radio de 2,4 GigaHertz et offrent une portée assez importante, qui peut varier de 10 à 100 mètres environ. Toutefois, les débits de transmission sont inférieurs à 54 Mégabits par seconde (soit un débit réel de 27 Mégabits par seconde).

La norme WiFiG ou 802.11 ad permet de diffuser des données dans le bâtiment avec des débits de transmission plus élevés, de plus de 1 Gigabits par seconde. Cependant, les signaux échangés sur la bande de fréquence radio de 60 GigaHertz ne traversent généralement pas les murs, les éventuelles structures métalliques et autres mobiliers. De plus, la portée est réduite à environ 5 à 8 mètres en espace libre.

On connait des installations de réseaux locaux utilisant des techniques de transmission « radio-sur-fibres » (Radio-Over-Fiber) permettant de déporter l'émission et la réception radiofréquence des données dans les différentes pièces du bâtiment grâce à l'utilisation de fibres optiques. Ces installations comprennent généralement un ensemble de fibres optiques raccordées au point de connexion et reliées à des antennes disposées dans les différentes pièces.

Cependant, certains appareils ne sont pas équipés d'émetteurs-récepteurs radiofréquence adaptés pour communiquer sans fil avec les antennes de ces installations.

De plus, certains services ne sont pas accessibles par le WiFi. C'est le cas par exemple du téléphone filaire, de la télévision numérique terrestre (TNT) ou de la télévision par satellite.

Par ailleurs, le document GB 2 244 848 décrit un câble composite conforme au préambule de la revendication 1.

### RESUME DE L'INVENTION

Un but de l'invention est de proposer une installation autorisant l'accès simultané à un grand nombre de services.

Selon un premier aspect, ce but est atteint dans le cadre de la présente invention grâce à une installation de réseau local, comprenant :

- un coupleur coaxial,
- une pluralité de modules émetteurs-récepteurs destinés à être répartis en différents lieux dans un bâtiment,
- une pluralité de câbles, chaque câble comprenant un premier ensemble conducteur comprenant au moins deux conducteurs métalliques, un deuxième ensemble conducteur coaxial comprenant un conducteur métallique intérieur, une enveloppe en matériau diélectrique entourant le conducteur métallique intérieur et un conducteur métallique extérieur entourant l'enveloppe en matériau diélectrique, et une gaine entourant le premier ensemble conducteur et le deuxième ensemble conducteur, la gaine comprenant deux éléments de gaine séparables longitudinalement de manière à autoriser un raccordement indépendant du premier ensemble conducteur et du deuxième ensemble conducteur,

chaque câble reliant le coupleur coaxial à l'un des modules émetteurs-récepteurs via le deuxième ensemble conducteur du câble,

chaque module émetteur-récepteur étant adapté pour émettre selon un protocole de communication sans fil vers des terminaux utilisateurs présents dans le bâtiment, des signaux de données transmis par le deuxième ensemble conducteur, et transmettre par le deuxième ensemble conducteur des signaux de données reçus depuis les terminaux utilisateurs selon un protocole de communication sans fil.

Par « réseau local », on désigne un réseau résidentiel ou un réseau tertiaire, c'est-à-dire un réseau qui relie un ensemble de terminaux d'un même bâtiment ou d'un petit groupe de bâtiments.

Le câble mis en oeuvre dans l'installation proposée permet de transmettre dans un même conduit les signaux de données radio-sur-coaxial ou tout autre service utilisant le coaxial et des signaux téléphoniques, Ethernet ou de télévision via la ou les paire(s) de conducteurs métalliques, sans générer de surcoût d'installation.

Bien que regroupés au sein d'un même câble, le coaxial et les conducteurs métalliques doivent pouvoir être raccordés à des équipements différents et via des modes de connexion différents. A cet effet, la gaine comprend deux éléments de gaine séparables longitudinalement pour pouvoir raccorder le coaxial et les conducteurs métalliques indépendamment les uns des autres.

Par ailleurs, le premier ensemble conducteur peut comprendre une enveloppe de blindage entourant les conducteurs métalliques.

Les deux conducteurs métalliques entourés de l'enveloppe de blindage présentent de préférence une atténuation sensiblement constante dans les bandes de fréquences utilisées pour la diffusion de la télévision numérique ou analogique. Par exemple, pour la diffusion de la télévision analogique en France, il s'agit de la bande de fréquence III comprise entre 174 et 230 MégaHertz. Pour la diffusion de la télévision numérique terrestre en France, il s'agit des bandes de fréquences IV et V, comprises entre 470 et 862 MégaHertz. Une atténuation « sensiblement constante » signifie que l'atténuation de la puissance des signaux transmis par les deux conducteurs métalliques est dépourvue de pics pour les fréquences considérées. Cette caractéristique permet d'utiliser les deux conducteurs métalliques pour transmettre des signaux de télévision.

L'installation proposée peut en outre présenter les caractéristiques suivantes :

- l'installation comprend un coffret de brassage et une pluralité de prises de raccordement réparties dans le bâtiment, chaque câble reliant le coffret de brassage à l'une des prises de raccordement via le premier ensemble conducteur du câble,
- l'installation comprend en outre un modem routeur d'abonné destiné à être disposé dans une pièce du logement et adapté pour recevoir des signaux radiofréquence en provenance d'un réseau câblé d'un opérateur via l'ensemble conducteur coaxial dans une première bande de fréquences et pour renvoyer les signaux reçus via l'ensemble conducteur coaxial du même câble dans une deuxième bande de fréquences vers le coupleur coaxial pour diffusion vers la pluralité de modules émetteurs-récepteurs,
- le premier ensemble conducteur comprend quatre paires de conducteurs métalliques,
- les conducteurs métalliques de chaque paire sont torsadés ensemble,
- la gaine comprend un premier élément de gaine entourant une première cavité et un deuxième élément de gaine entourant une deuxième cavité, le premier ensemble conducteur s'étendant à l'intérieur de la première cavité et le deuxième ensemble conducteur s'étendant à l'intérieur de la deuxième cavité,
- le premier élément de gaine et le deuxième élément de gaine sont séparables,
- chaque module émetteur-récepteur est adapté pour être alimenté en énergie électrique via le premier ensemble conducteur.

L'invention se rapporte également à l'utilisation d'un câble comprenant :

- un premier ensemble conducteur comprenant au moins deux conducteurs métalliques,
- un deuxième ensemble conducteur coaxial, et
- une gaine entourant le premier ensemble conducteur et le deuxième ensemble conducteur, et comprenant deux éléments de gaine séparables longitudinalement de manière à autoriser un raccordement indépendant du premier ensemble conducteur et du deuxième ensemble conducteur,

pour relier un coupleur coaxial à un module émetteur-récepteur dans une installation de réseau local telle que définie précédemment.Selon un deuxième aspect, l'invention concerne une installation de réseau résidentiel comprenant :

- un coffret de brassage destiné à être disposé dans une gaine technique d'un logement,
- un modem routeur d'abonné destiné à être disposé dans une pièce du logement et adapté pour recevoir des signaux de données radiofréquence en provenance d'un réseau coaxial d'un opérateur et pour renvoyer les signaux de données vers le coffret de brassage,
- une pluralité de prises de connexion destinées à être réparties dans différentes pièces du logement et adaptées pour être raccordées à des appareils de diffusion multimédia,
- une pluralité de câbles de transmission, incluant un câble de transmission reliant le coffret de brassage au modem routeur d'abonné, et des câbles de transmission reliant le coffret de brassage aux prises de connexion,

dans lequel le câble de transmission reliant le coffret de brassage au modem routeur d'abonné comprend un premier ensemble conducteur comprenant au moins quatre conducteurs métalliques adaptés pour transmettre les signaux de données vers le coffret de brassage pour transmission des signaux vers les différentes prises de connexion, et un deuxième ensemble conducteur comprenant un ensemble conducteur coaxial adapté pour transmettre les signaux de données en provenance du réseau coaxial vers le modem routeur d'abonné.

Grâce au câble de transmission reliant le coffret de brassage au modem routeur d'abonné (ou box), il est possible de disposer le modem routeur à distance du coffret de brassage, dans une pièce du logement. Le modem routeur reçoit les signaux de données via l'ensemble coaxial du câble et renvoie les signaux via les conducteurs métalliques vers le coffret de brassage pour diffusion vers les différentes prises de connexion du logement.

L'installation peut en outre présenter les caractéristiques suivantes :

- l'installation comprend en outre une prise de connexion hybride comprenant un connecteur coaxial pour le raccordement du modem routeur d'abonné à l'ensemble coaxial du câble et un connecteur électrique pour le raccordement du modem routeur aux quatre conducteurs métalliques,

- le câble de transmission reliant le coffret de brassage au modem routeur d'abonné comprend une gaine comprenant un premier élément de gaine entourant une première cavité et un deuxième élément de gaine entourant une deuxième cavité, les deux éléments de gaine étant séparables longitudinalement de manière à autoriser un raccordement indépendant du premier ensemble conducteur et du deuxième ensemble conducteur,
- le premier ensemble conducteur comprend entre deux et quatre paires de conducteurs métalliques,
- les conducteurs métalliques sont torsadés ensemble par paires.

Selon un troisième aspect, l'invention concerne un câble pour réseau local comprenant :

- un premier ensemble conducteur comprenant entre deux et quatre paires de conducteurs métalliques,
- un deuxième ensemble conducteur coaxial comprenant un conducteur métallique intérieur, une enveloppe en matériau diélectrique entourant le conducteur métallique intérieur et un conducteur métallique extérieur entourant l'enveloppe en matériau diélectrique, et
- une gaine entourant le premier ensemble conducteur et le deuxième ensemble conducteur, la gaine comprenant deux éléments de gaine séparables longitudinalement de manière à autoriser un raccordement indépendant du premier ensemble conducteur et du deuxième ensemble conducteur.

Le câble proposé est particulièrement adapté pour transmettre dans un même conduit les signaux de données radio-sur-coaxial ou tout autre service utilisant le coaxial et des signaux téléphoniques, Ethernet ou de télévision via la ou les paire(s) de conducteurs métalliques, sans générer de surcoût d'installation.

Le câble permet notamment de relier un coffret de brassage à une prise de raccordement dans un réseau local.

Le câble peut en outre présenter les caractéristiques suivantes :

- le premier ensemble conducteur est dépourvu d'enveloppes de blindage entourant les paires individuellement,
- le premier ensemble conducteur est dépourvu d'une enveloppe d'écrantage entourant l'ensemble des paires de conducteurs métalliques du premier ensemble conducteur.

Selon un quatrième aspect, l'invention concerne l'utilisation d'un câble tel que défini précédemment, pour relier le coffret de brassage au modem routeur d'abonné dans une installation de réseau résidentiel.

Enfin, selon un cinquième aspect, l'invention concerne l'utilisation d'un câble tel que défini précédemment, pour relier le coffret de brassage à l'une des prises de connexion dans une installation de réseau résidentiel.

## PRESENTATION DES DESSINS

D'autres caractéristiques et avantages ressortiront encore de la description qui suit, laquelle est purement illustrative et non limitative, et doit être lue en regard des figures annexées, parmi lesquelles :

- la figure 1 représente de manière schématique, en coupe transversale, une première structure de câble, qui ne fait pas partie de l'invention,
- la figure 2 représente de manière schématique, en coupe transversale, une deuxième structure de câble, qui ne fait pas partie de l'invention,
- la figure 3 représente de manière schématique, en coupe transversale, une troisième structure de câble, qui ne fait pas partie de l'invention,
- la figure 4 représente de manière schématique, en coupe transversale, une quatrième structure de câble,
- la figure 5 représente de manière schématique, en coupe transversale, une cinquième structure de câble,
- la figure 6 représente de manière schématique une première installation de réseau résidentiel, qui ne fait pas partie de l'invention,
- la figure 7 représente de manière schématique une deuxième installation de réseau résidentiel, qui ne fait pas partie de l'invention,
- la figure 8 représente de manière schématique une troisième installation de réseau résidentiel, qui ne fait pas partie de l'invention,
- la figure 9 représente de manière schématique une quatrième installation de réseau résidentiel,
- la figure 10 représente de manière schématique une cinquième installation de réseau résidentiel,
- la figure 11 représente de manière schématique une sixième installation de réseau résidentiel.

## DESCRIPTION DETAILLEE D'UN MODE DE REALISATION

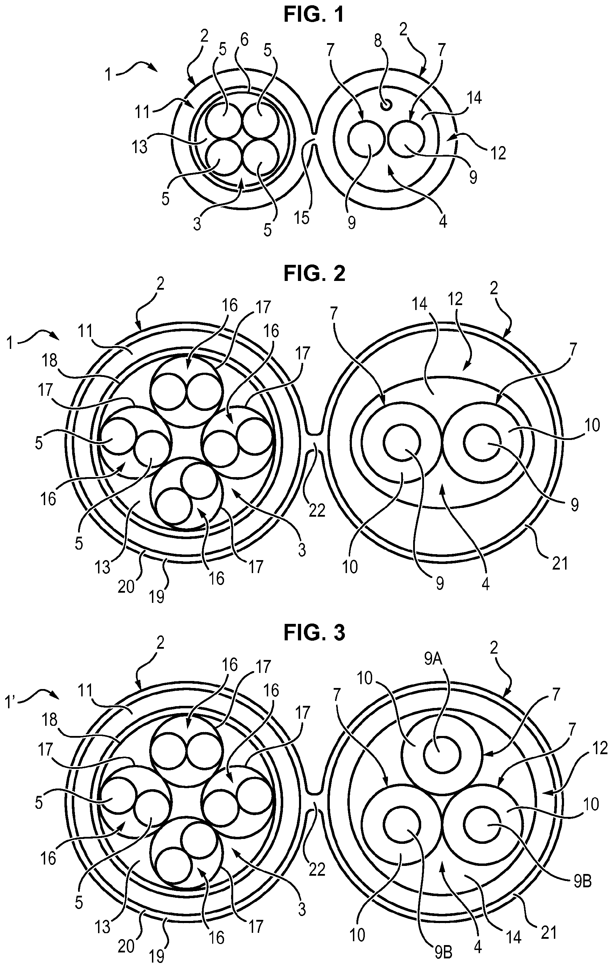

Sur la figure 1, le câble 1 représenté, qui ne fait pas partie de l'invention, comprend une gaine 2, un premier ensemble conducteur 3 et un deuxième ensemble conducteur 4.

Le premier ensemble conducteur 3 comprend quatre conducteurs métalliques 5 et une enveloppe de blindage 6 entourant les conducteurs métalliques. Les quatre conducteurs métalliques 5 ont été torsadés ensembles en une seule opération de manière à former une quarte de conducteurs métalliques. L'assemblage en quarte présente un encombrement réduit par rapport à l'assemblage sous forme de deux paires torsadées.

Les conducteurs métalliques 5 sont des conducteurs comprenant une âme conductrice en cuivre et une peau isolante en matériau thermoplastique. La quarte de conducteurs métalliques présente diamètre externe égal à 2,17 millimètres.

L'enveloppe de blindage 6 est formée d'un ruban d'aluminium enroulée en hélice autour de la quarte. L'enveloppe de blindage 6 permet d'isoler les conducteurs métalliques 5, et notamment les conducteurs métalliques 5 transportant des signaux de télévision, afin de protéger les signaux de télévision des interférences.

La quarte de conducteurs métalliques 5 peut être utilisée pour la transmission de données informatiques de type Ethernet 100 Mégabits/s ou pour la transmission de signaux téléphoniques de type analogiques.

A cet effet, les conducteurs métalliques présentent de préférence une atténuation sensiblement constante dans les bandes de fréquences utilisées pour la diffusion de la télévision numérique ou analogique. Plus précisément, dans ces bandes de fréquences, l'atténuation de la puissance du signal transmis par les conducteurs métalliques présente la forme suivante:

$$a \times \sqrt{F} + b \times F + \frac{c}{\sqrt{F}},$$ où $a$, $b$ et c sont des coefficients qui dépendent des caractéristiques des conducteurs métalliques et F est la fréquence.

Le deuxième ensemble conducteur 4 comprend deux conducteurs optiques 7 et un élément de renfort 8. Chaque conducteur optique 7 comprend une fibre optique semi-serrée 9. L'élément de renfort peut être un élément de renfort en fibres d'aramide.

La gaine 2 comprend un premier élément de gaine 11 et un deuxième élément de gaine 12.

Le premier élément de gaine 11 entoure une première cavité 13 à l'intérieur de laquelle s'étend le premier ensemble conducteur 3.

Le deuxième élément de gaine 12 entoure une deuxième cavité 14 à l'intérieur de laquelle s'étend le deuxième ensemble conducteur 4.

La gaine 2 présente une zone de jonction 15 reliant le premier élément de gaine 11 et le deuxième élément de gaine 12. La zone de jonction 15 s'étend selon une direction longitudinale du câble entre le premier élément de gaine 11 et le deuxième élément de gaine 12. La zone de jonction 15 constitue une zone amincie de moindre résistance de la gaine 2. La zone de jonction 15 est prévue pour se déchirer de manière à permettre une séparation du premier élément de gaine 11 et du deuxième élément de gaine 12. Cela permet un raccordement indépendant du premier ensemble conducteur 3 et du deuxième ensemble conducteur 4.

La gaine 2 est formée en une seule pièce de matière par extrusion autour des premier et deuxième ensembles de conducteurs 3 et 4. La matière formant la gaine 2 est du PVC (polychlorure de vinyle) ou un matériau LSOH (matériau à faible taux de dégagement de fumées et quasi-absence de dégagement de gaz halogénés), tel que du polyéthylène ou du polypropylène chargé par exemple.

Sur la figure 2, le câble 1 représenté, qui ne fait pas partie de l'invention, comprend une gaine 2, un premier ensemble conducteur 3 et un deuxième ensemble conducteur 4.

Le premier ensemble conducteur 3 comprend quatre paires 16 de conducteurs métalliques isolés, quatre enveloppes de blindage 17, chaque enveloppe de blindage 17 entourant une paire 16 de conducteurs métalliques isolés, et une enveloppe d'écrantage 18 entourant l'ensemble des paires 16 de conducteurs métalliques avec leurs enveloppes respectives 17.

Chaque paire 16 de conducteurs métalliques comprend deux conducteurs métalliques 5 torsadés ensemble. Les conducteurs métalliques 5 sont des conducteurs comprenant une âme conductrice en cuivre et une peau isolante en matériau thermoplastique.

Chaque enveloppe de blindage 17 est formée d'un ruban d'aluminium enroulée en hélice autour de la paire 16 de conducteurs métalliques. L'enveloppe de blindage 17 permet d'isoler les conducteurs métalliques 5 des rayonnements électromagnétiques, et notamment les conducteurs métalliques 5 transportant des signaux de télévision, afin de protéger les signaux de télévision des interférences.

L'enveloppe d'écrantage 18 s'étend entre les paires 16 de conducteurs métalliques et la gaine 2. L'enveloppe d'écrantage 18 est formée d'une feuille d'aluminium ou d'une tresse métallique enveloppant les paires 16 de conducteurs métalliques.

Les paires 16 de conducteurs incluent :

- deux paires de conducteurs pour la transmission de données informatiques à des débits pouvant atteindre 100 Mégabits/s,
- une paire de conducteurs pour la transmission de signaux téléphoniques de type analogiques, et
- une paire de conducteurs pour la transmission de signaux de télévision.

Le deuxième ensemble conducteur 4 comprend deux conducteurs optiques 7. Chaque conducteur optique 7 comprend une fibre optique semi-serrée 9 et une enveloppe de protection 10 entourant la fibre optique 9. Le diamètre extérieur de l'enveloppe de protection est typiquement de 2 millimètres.

La gaine 2 comprend un premier élément de gaine 11, un deuxième élément de gaine 12 et un troisième élément de gaine 19.

Le premier élément de gaine 11 est constitué d'un premier tube entourant une première cavité 13 à l'intérieur de laquelle s'étend le premier ensemble conducteur 3.

Le deuxième élément de gaine 12 est constitué d'un tube entourant une deuxième cavité 14 à l'intérieur de laquelle s'étend le deuxième ensemble conducteur 4.

Le premier élément de gaine 11 et le deuxième élément de gaine 12 sont formés en PVC (polychlorure de vinyle) ou en un matériau LSOH (matériau à faible taux de dégagement de fumées et quasi-absence de dégagement de gaz halogénés), tel que du polyéthylène ou du polypropylène chargé par exemple.

Le troisième élément de gaine 19 entoure le premier élément de gaine 11 et le deuxième élément de gaine 12. Plus précisément, le troisième élément de gaine 19 comprend une première partie 20 qui entoure le premier élément de gaine 11, une deuxième partie 21 qui entoure le deuxième élément de gaine 12 et une partie de jonction 22 reliant la première partie 20 et la deuxième partie 21 entre elles.

La partie de jonction 22 s'étend longitudinalement entre la première partie 20 et la deuxième partie 21. La partie de jonction 22 constitue une zone amincie de moindre résistance du troisième élément de gaine 19. La partie de jonction 22 est prévue pour se déchirer de manière à permettre une séparation du premier élément de gaine 11 et du deuxième élément de gaine 12.

Le troisième élément de gaine 19 est formé en une seule pièce de matière par extrusion autour des premier et deuxième éléments de gaine 11 et 12.

Sur la figure 3, le câble 1' représenté, qui ne fait pas partie de l'invention, est identique au câble 1 de la figure 2, excepté que le deuxième ensemble conducteur 4 comprend trois conducteurs optiques 7. Chaque conducteur optique 7 comprend une fibre optique semi-serrée 9. Les trois fibres optiques 9 incluent une fibre monomode 9A et deux fibres multimodes 9B.

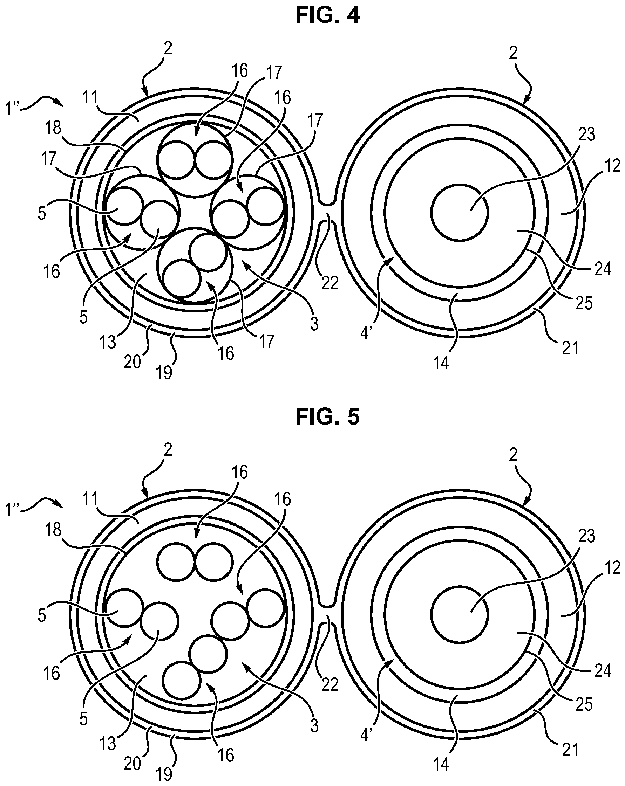

Sur la figure 4, le câble 1" représenté est identique au câble 1 de la figure 3, excepté que le deuxième ensemble conducteur 4 a été remplacé par un deuxième ensemble conducteur 4'.

Le deuxième ensemble conducteur 4' est un ensemble conducteur coaxial comprenant un conducteur métallique intérieur 23 (ou conducteur central), une enveloppe 24 en matériau diélectrique entourant le conducteur métallique intérieur 23 et un conducteur métallique extérieur 25 (ou conducteur périphérique) entourant l'enveloppe 24 en matériau diélectrique.

Sur la figure 5, le câble 1" représenté est identique au câble de la figure 4, excepté que le premier ensemble conducteur 3 comprend quatre paires 16 de conducteurs métalliques isolés, chaque paire 16 étant dépourvue d'enveloppe de blindage 17.

Autrement dit, le premier ensemble conducteur 3 est constitué de paires 16 de conducteurs métalliques isolés, non blindées.

Selon une variante de réalisation, le premier ensemble conducteur 3 ne comprend pas d'enveloppe d'écrantage 18. Dans ce cas, le premier ensemble conducteur 3 est constitué de paires 16 de conducteurs métalliques isolés, non blindées et non écrantées.

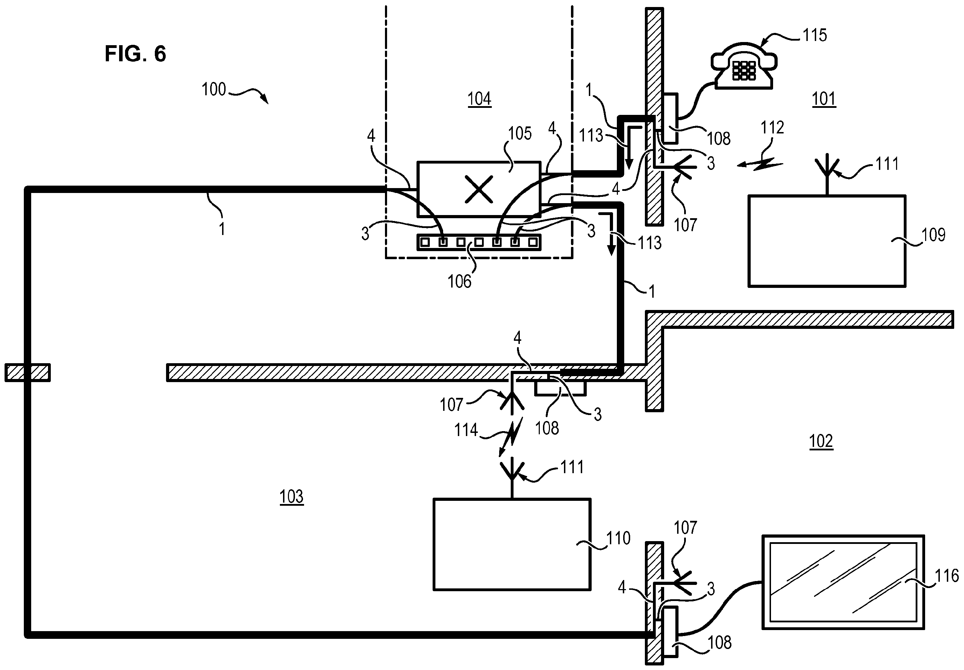

La figure 6 représente de manière schématique une première installation 100 de réseau résidentiel, qui ne fait pas partie de l'invention, dans un logement comprenant plusieurs pièces 101 à 103 séparées les unes des autres par des cloisons et une gaine technique 104.

L'installation 100 représentée comprend un coupleur optique 105, un coffret de brassage 106, une pluralité de câbles 1, une pluralité de modules émetteurs-récepteurs 107 et une pluralité de prises de connexion 108.

Le coupleur optique 105 et le coffret de brassage 106 sont disposés dans la gaine technique 104 du logement (GTL).

Les modules émetteurs-récepteurs 107 et les prises de connexion 108 sont répartis dans les différentes pièces 101 à 103 du logement.

Les câbles 1 sont des câbles conformes au câble de la figure 1, de la figure 2 ou de la figure 3. Les câbles 1 relient les modules émetteurs-récepteurs 107 au coupleur optique 105 et les prises de connexion 108 au coffret de brassage 106.

Plus précisément, chaque module émetteur-récepteur 107 disposé dans une pièce 101, 102, 103 du logement est relié au coupleur optique 105 disposé dans la gaine technique du logement 104 via le deuxième ensemble conducteur 4 du câble 1.

Le coupleur optique 105 a pour fonction d'assurer une liaison entre les fibres optiques 9 des différents câbles 1 de l'installation, afin de transmettre des données d'un câble 1 à l'autre et de permettre des échanges de données entre plusieurs terminaux utilisateur 109 et 110.

Chaque module émetteur-récepteur 107 est configuré pour convertir les signaux de données optiques transmis par le câble 1 en signaux de données radio-fréquence, et pour émettre les signaux de données radio-fréquence selon un protocole de communication sans fil vers un terminal utilisateur 109, 110 présent dans la pièce 101, 103. Le module émetteur-récepteur 107 est également configuré pour recevoir les signaux de données radio-fréquence émis par un terminal utilisateur 109, 110 selon un protocole de communication sans fil, et pour convertir les signaux de données radio-fréquence en signaux de données optiques qui sont transmis par le câble 1. A cet effet, le module émetteur-récepteur 107 est raccordé aux deux conducteurs optiques 7, l'un des conducteurs optiques 7 étant utilisé pour transmettre des signaux de données du coupleur optique 105 vers le module émetteur-récepteur 107 (dans le sens montant) et l'autre conducteur optique 7 étant utilisé pour transmettre des données du module émetteur-récepteur 107 vers le coupleur optique 105 (dans le sens descendant).

L'installation 100 permet un échange de données entre les différents terminaux utilisateurs 109, 110 équipés de modules émetteurs-récepteurs 111 présents dans le logement. A cet effet, un premier terminal utilisateur 109 présent dans une première pièce 101 émet un signal de données radio-fréquence 112 selon un protocole de communication sans fil. Le signal de données 112 est reçu par un premier module émetteur-récepteur 107 situé à proximité du terminal utilisateur 109. Le premier module émetteur-récepteur 107 convertit le signal de données 112 qu'il reçoit en un signal optique 113 et émet le signal optique 113 sur une fibre optique 9 du conducteur optique 7 d'un premier câble 1. Le signal 113 est transporté par la fibre optique 9 du premier câble 1 vers le coupleur optique 105. Le coupleur optique 105 reçoit le signal optique 113 et le réémet sur la fibre optique 9 d'un deuxième câble 1. Le signal 113 est transporté par la fibre optique 9 du deuxième câble 1 vers un deuxième module émetteur-récepteur 107. Le deuxième module émetteur-récepteur 107 convertit le signal optique 113 qu'il reçoit en un signal de données radio-fréquence 114 et émet le signal de données 114 vers un deuxième terminal utilisateur 110 localisé à proximité du deuxième module émetteur-récepteur 107 selon le protocole de communication sans fil.

L'installation 100 permet également la diffusion de services tels que le téléphone filaire et la télévision numérique terrestre (TNT) ou satellite dans les différentes pièces 101 à 103 du logement.

Le coffret de brassage 106 a pour fonction de centraliser des services multimédia (téléphonie, télévision terrestre, télévision satellite, Ethernet, télévision sur Internet, etc.) en provenance de différents réseaux d'accès et de diffuser ces services dans les différentes pièces 101 à 103 du logement. A cet effet, le coffret de brassage 106 est raccordé d'une part à un réseau de communication externe (non-représenté) ainsi qu'à une antenne de télévision terrestre ou satellite (non-représentée), et d'autre part aux différentes prises de connexion 108 réparties dans les différentes pièces 101 à 103 du logement via les premiers ensembles conducteurs 3 des câbles 1. Chaque prise de connexion 108 permet le raccordement d'un appareil 115, 116, tel qu'un téléphone filaire, une télévision, un ordinateur ou tout équipement de communication fonctionnant sur la base d'un protocole d'échange de données Ethernet.

Les prises de connexion 108 sont par exemple des prises standard de type RJ-45.

Chaque câble 1 présente une première extrémité reliée au coupleur optique 105 et au coffret de brassage 106 et une deuxième extrémité reliée à un module émetteur-récepteur 107 et à une prise de connexion 108. Le premier élément de gaine 11 et le deuxième élément de gaine 12 sont séparés l'un de l'autre à chacune des extrémités du câble 1. La séparation des éléments de gaine 11 et 12 permet, au niveau de la première extrémité du câble 1, de raccorder le premier ensemble conducteur 3 au coffret de brassage 106 et le deuxième ensemble conducteur 4 au coupleur optique 105. Cela permet également, au niveau de la deuxième extrémité du câble, de raccorder le premier ensemble conducteur 3 à la prise de connexion 108 et le deuxième ensemble conducteur 4 au module émetteur-récepteur 107.

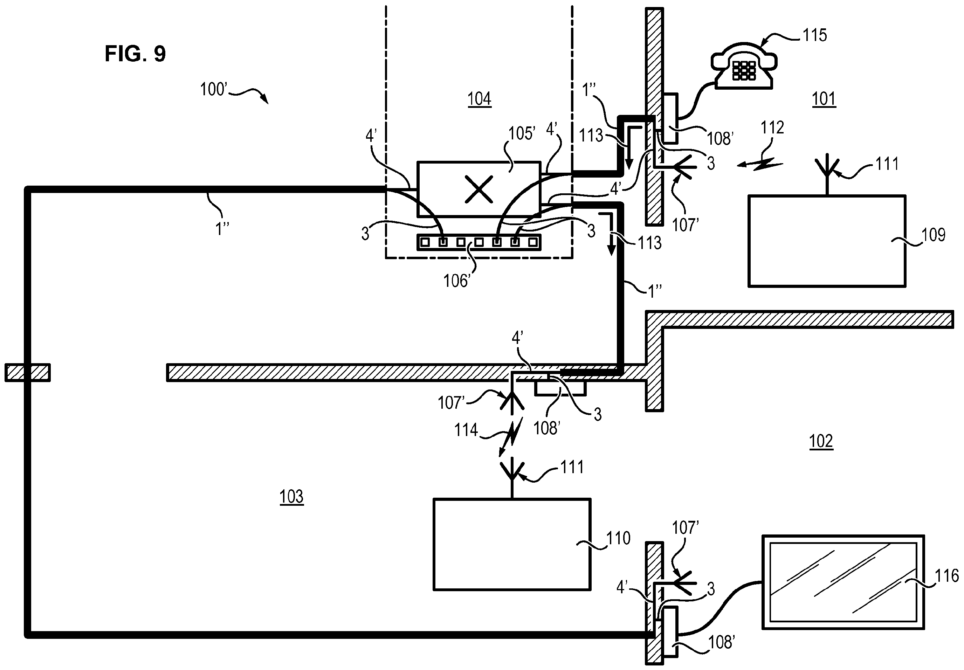

Dans une variante de réalisation, qui fait partie de l'invention, représentée sur la figure 9, l'installation 100' comprend un coupleur radiofréquence coaxial 105' (à la place du coupleur optique 105), une pluralité de câbles 1" (à la place des câbles 1), une pluralité de modules émetteurs-récepteurs 107' et une pluralité de prises de connexion 108' répartis dans les différentes pièces 101 à 103 du logement.

Les câbles 1" sont conformes aux câbles représentés sur la figure 4 ou la figure 5.

Les câbles 1" relient d'une part les modules émetteurs-récepteurs 107' au coupleur radiofréquence coaxial 105', et d'autre part les prises de connexion 108' au coffret de brassage 106'.

Plus précisément, chaque module émetteur-récepteur 107' disposé dans une pièce 101, 102, 103 du logement est relié au coupleur radiofréquence coaxial 105' disposé dans la gaine technique du logement 104 via le deuxième ensemble conducteur 4' du câble 1 ".

Le coupleur radiofréquence coaxial 105' a pour fonction d'assurer une liaison entre les ensembles coaxiaux 4' des différents câbles 1" de l'installation, afin de transmettre des données d'un câble 1" à l'autre et de permettre des échanges de données entre plusieurs terminaux utilisateur 109 et 110.

Chaque module émetteur-récepteur 107' est configuré pour émettre les signaux de données radio-fréquence transmis par l'ensemble coaxial 4' selon un protocole de communication sans fil vers un terminal utilisateur 109, 110 présent dans la pièce 101, 103. Le module émetteur-récepteur 107' est également configuré pour recevoir les signaux de données radio-fréquence émis par un terminal utilisateur 109, 110 selon un protocole de communication sans fil, et pour transmettre les signaux de données radio-fréquence par le câble 1". A cet effet, le module émetteur-récepteur 107' est raccordé aux deux conducteurs métalliques 23 et 25 de l'ensemble coaxial 4', le conducteur métallique 23 étant utilisé pour transmettre des signaux de données du coupleur radiofréquence vers le module émetteur-récepteur 107' (dans le sens montant) et pour transmettre des données du module émetteur-récepteur 107' vers le coupleur radiofréquence 105' (dans le sens descendant).

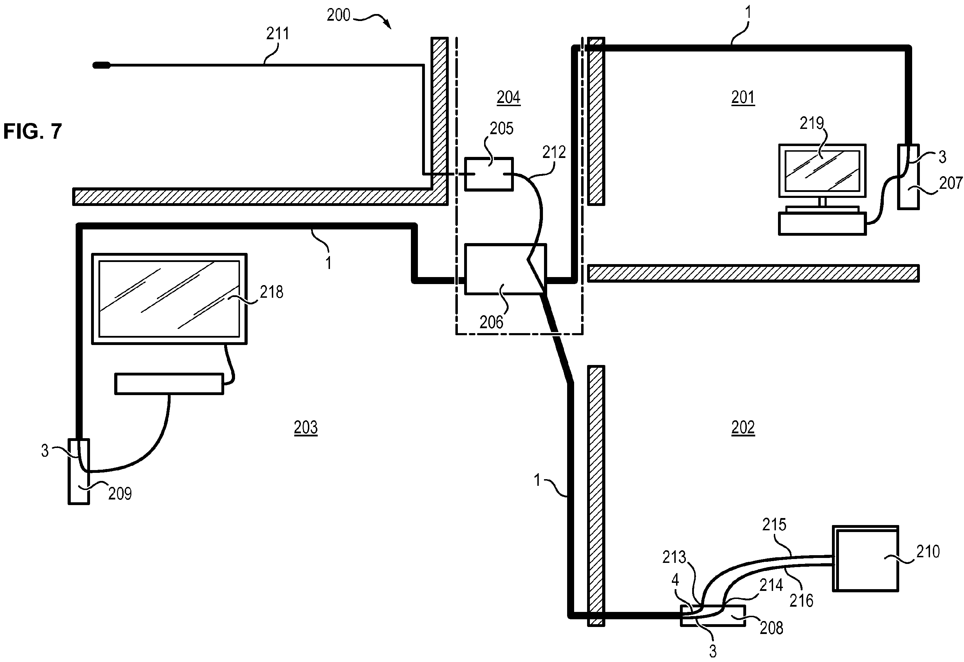

La figure 7 représente de manière schématique une deuxième installation 200 de réseau résidentiel, qui ne fait pas partie de l'invention, dans un logement comprenant plusieurs pièces 201 à 203 séparées les unes des autres par des cloisons et une gaine technique 204.

L'installation 200 représentée comprend un dispositif de terminaison intérieure optique (DTIO) 205, un coffret de brassage 206, une pluralité de câbles 1, une pluralité de prises de connexion 207 à 209 et un modem routeur optique 210 (ou box optique).

Le dispositif de terminaison intérieur optique 205 est relié d'une part à une fibre optique 211 d'un réseau de communication d'un opérateur s'étendant à l'extérieur du logement et d'autre part à un cordon optique d'abonné 212, et sert de point d'interface entre le réseau de communication et le réseau résidentiel.

Le coffret de brassage 206 a pour fonction de centraliser des services multimédia (téléphonie, télévision terrestre, télévision satellite, Ethernet, télévision sur Internet, etc.) en provenance de différents réseaux d'accès incluant le réseau de communication de l'opérateur, et de diffuser ces services dans les différentes pièces 201 à 203 du logement. A cet effet, le coffret de brassage 206 est raccordé d'une part au dispositif de terminaison intérieure optique 205 via le cordon optique 212, et d'autre part aux différentes prises de connexion 207 à 209 réparties dans les différentes pièces 201 à 203 du logement via les câbles 1.

Les prises de connexion 207 à 209 sont réparties dans les différentes pièces 201 à 203 du logement.

Les câbles 1 sont des câbles conformes au câble de la figure 1, de la figure 2, ou de la figure 3. Les câbles 1 relient les prises de connexion 207 à 209 au coffret de brassage 206.

L'une des prises de connexion 208 est une prise hybride comprenant un connecteur optique 213 et un connecteur cuivre 214 de type RJ-45.

La box optique 210 est reliée au câble 1 par le biais d'un cordon optique 215 connecté au connecteur optique 213 et d'un cordon Ethernet 216 connecté au connecteur cuivre 214. Plus précisément, la box optique 210 est reliée d'une part au deuxième ensemble conducteur 4 du câble par le cordon optique 215, et d'autre part au premier ensemble conducteur 3 du câble par le cordon Ethernet.

Les autres prises de connexion 207 et 209 peuvent être des prises comprenant uniquement un connecteur de type RJ-45 ou des prises hybrides identiques à la prise de connexion 208. Chaque prise de connexion 207 à 209 permet le raccordement d'un appareil 218, 219, tel qu'un téléphone filaire, une télévision, un ordinateur ou tout équipement de communication fonctionnant sur la base d'un protocole d'échange de données Ethernet.

L'installation 200 permet à l'utilisateur de placer la box optique 210 dans une pièce 202 du logement (et non dans la gaine technique du logement 204), tout en bénéficiant pleinement de l'ensemble des services issus de la box (voix, données et images sur IP) sur chacune des prises de connexion 207 à 209 du logement. De cette manière, l'utilisateur peut commander la box 210 et utiliser les fonctions propres à celle-ci (réinitialisation, accès au disque dur interne, arrêt des services de communication sans fil, tests, etc.).

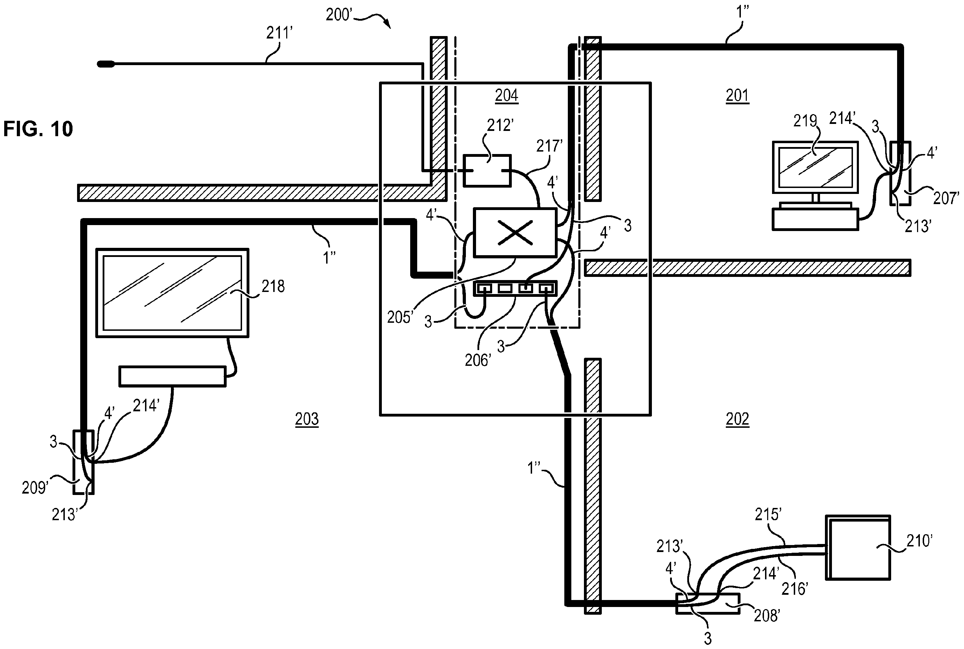

Dans une variante de réalisation, qui fait partie de l'invention, représentée sur la figure 10, l'installation 200' comprend un premier coupleur coaxial 212' (à la place du DTIO 205), un modem routeur câblée 210' (à la place de la box optique 210), une pluralité de câbles 1" conformes au câble de la figure 4 ou de la figure 5 (à la place des câbles 1), un deuxième coupleur radiofréquence coaxial 205' (à la place du coupleur optique 205), un coffret de brassage cuivre 206' et une pluralité de prises de connexion 207' à 209' réparties dans les différentes pièces 201 à 203 du logement.

Le coupleur coaxial 212' est relié d'une part à un câble coaxial 211' d'un réseau de communication d'un opérateur s'étendant à l'extérieur du logement et d'autre part au coupleur radiofréquence coaxial 205' via un cordon de raccordement coaxial 217'.

Le coupleur radiofréquence coaxial 205' a pour fonction de recevoir des signaux en provenance du réseau de communication de l'opérateur et de transmettre ces signaux dans l'une des pièces 201 à 203 du logement afin de pouvoir raccorder le modem routeur câblé 210'. A cet effet, le coupleur coaxial 205' est raccordé à au moins une prise de connexion 208' située dans la pièce 202 du logement via l'un des câbles 1".

La prise de connexion 208' est une prise hybride comprenant un connecteur coaxial 213' et un connecteur cuivre 214' de type RJ-45.

Le modem routeur câblé 210' (ou box câblée) est relié à l'un des câbles 1" par le biais d'un cordon coaxial 215' connecté au connecteur coaxial 213' et d'un cordon Ethernet 216' connecté au connecteur cuivre 214'. Plus précisément, la box câblée 210' est reliée d'une part au deuxième ensemble conducteur 4' du câble 1" par le cordon coaxial 215', et d'autre part au premier ensemble conducteur 3 du câble 1" par le cordon Ethernet 216'.

Les autres prises de connexion 207' et 209' peuvent être des prises comprenant uniquement un connecteur 214' de type RJ-45 ou des prises hybrides identiques à la prise de connexion 208'. Chaque prise de connexion 207' à 209' permet le raccordement d'un appareil 218, 219, tel qu'un téléphone filaire, une télévision, un ordinateur ou tout équipement de communication fonctionnant sur la base d'un protocole d'échange de données Ethernet.

Le coffret de brassage 206' a pour fonction de centraliser des services multimédia (téléphonie, télévision terrestre, télévision satellite, Ethernet, télévision sur Internet, etc.) en provenance de la box coaxiale 120' située dans l'une des pièces 202 du logement et de diffuser ces services dans les autres pièces 201 et 203 du logement. A cet effet, le coffret de brassage 206' est raccordé aux différentes prises de connexion 207' à 209' réparties dans les différentes pièces 201 à 203 du logement via les câbles 1".

Une telle installation permet de diffuser l'ensemble des services issus de la box câblée 210' (voix, données et images sur IP) sur chacune des prises de connexion 207' à 209' du logement.

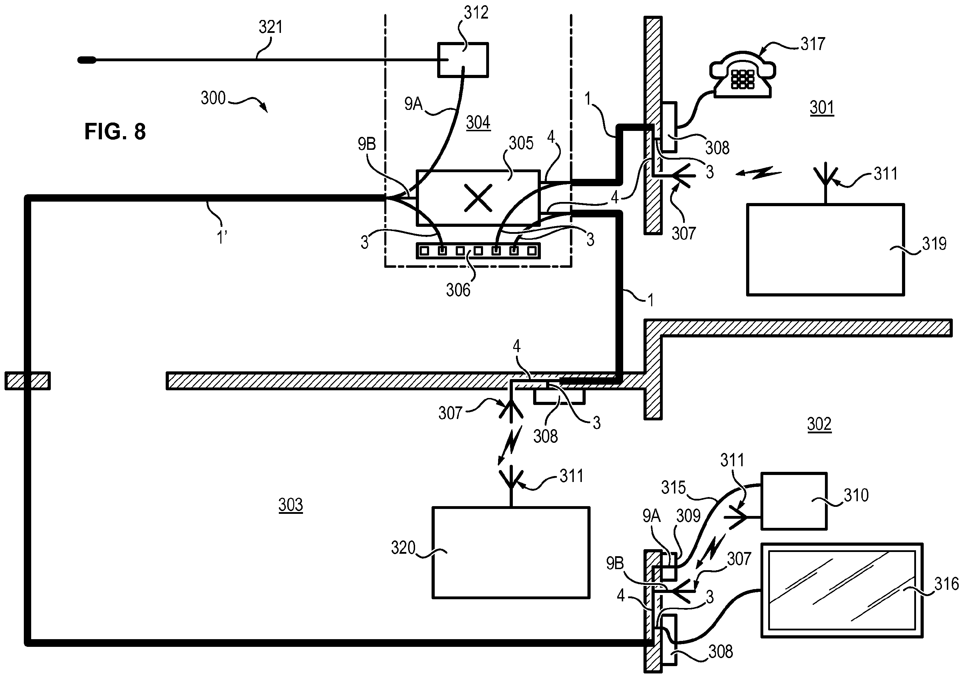

La figure 8 représente de manière schématique une troisième installation 300 de réseau résidentiel, qui ne fait pas partie de l'invention, dans un logement comprenant plusieurs pièces 301 à 303 séparées les unes des autres par des cloisons et une gaine technique 304.

L'installation 300 représentée comprend un dispositif de terminaison intérieure optique (DTIO) 312, un coupleur optique 305, un coffret de brassage 306, une pluralité de câbles 1 et 1', une pluralité de modules émetteurs-récepteurs 307 et une pluralité de prises de connexion 308 et 309.

Les câbles 1 et 1' sont des câbles conformes au câble de la figure 3.

Le dispositif de terminaison intérieure optique (DTIO) 312, le coupleur optique 305 et le coffret de brassage 306 sont disposés dans la gaine technique 304 du logement (GTL).

Le dispositif de terminaison intérieur optique 312 est relié d'une part à une fibre optique 321 d'un réseau de communication d'un opérateur s'étendant à l'extérieur du logement et d'autre part à une fibre optique monomode 9A du câble 1'. Le dispositif de terminaison intérieur optique 312 sert de point d'interface entre le réseau de communication et le réseau résidentiel.

Les câbles 1 relient les modules émetteurs-récepteurs 307 au coupleur optique 305 et les prises de connexion 308 au coffret de brassage 306.

Les modules émetteurs-récepteurs 307 et les prises de connexion 308 sont répartis dans les différentes pièces 301 à 303 du logement.

Plus précisément, chaque module émetteur-récepteur 307 disposé dans une pièce 301, 302, 303 du logement est relié au coupleur optique 305 disposé dans la gaine technique du logement 304 via le deuxième ensemble conducteur 4 du câble 1 ou 1'.

Le coupleur optique 305 a pour fonction d'assurer une liaison entre les fibres optiques multimode 9B des différents câbles 1 (ou 1') de l'installation, afin de transmettre des données d'un câble 1 (ou 1') à l'autre et de permettre des échanges de données entre plusieurs terminaux utilisateur 319 et 320.

Chaque module émetteur-récepteur 307 est configuré pour convertir les signaux de données optiques transmis par le câble 1 (ou 1') en signaux de données radio-fréquence, et pour émettre les signaux de données radio-fréquence selon un protocole de communication sans fil vers un terminal utilisateur 319, 320 présent dans la pièce 301, 303. Le module émetteur-récepteur 307 est également configuré pour recevoir les signaux de données radio-fréquence émis par un terminal utilisateur 319, 320 selon un protocole de communication sans fil, et pour convertir les signaux de données radio-fréquence en signaux de données optiques qui sont transmis par le câble 1 (ou 1'). A cet effet, le module émetteur-récepteur 307 est raccordé aux deux fibres optiques multimode 9B, l'une des fibres optiques multimode 9B étant utilisée pour transmettre des signaux de données du coupleur optique 305 vers le module émetteur-récepteur 307 (dans le sens montant) et l'autre fibre optique multimode 9B étant utilisée pour transmettre des données du module émetteur-récepteur 307 vers le coupleur optique 305 (dans le sens descendant).

Comme dans le cas de l'installation 100 de la figure 4, l'installation 300 permet un échange de données entre les différents terminaux utilisateurs 309, 310 équipés de modules émetteurs-récepteurs 311 présents dans le logement.

L'installation 300 représentée comprend également un modem routeur optique 310 (ou box optique) disposé dans l'une des pièces 302 du logement.

La box optique 310 est reliée au câble 1' par le biais d'un cordon optique 315 connecté à la prise de connexion 309. Plus précisément, la box optique 310 est reliée à la fibre monomode 9A du câble 1' par le cordon optique 315. De cette manière, la box optique 310 est reliée à la fibre 321 du réseau externe par le biais du câble 1'.

Par ailleurs, la box optique 310 comprend également un module émetteur-récepteur 311 configuré pour échanger des signaux de données avec un module-émetteur-récepteur 307 radio-fréquence selon un protocole de communication sans fil.

Chaque module émetteur-récepteur 307 est raccordé aux fibres multimodes 9B du câble 1 ou 1'.

De cette manière, la box optique 310 peut renvoyer les signaux de données optiques qu'elle reçoit du réseau externe (dans le sens montant) vers le coupleur optique 305 pour diffusion vers les différents modules émetteurs-récepteurs 307 du logement. De même, la box optique 310 peut renvoyer des signaux de données radio-fréquence qu'elle reçoit de la part des terminaux utilisateurs 319, 320 vers la fibre 321 (dans le sens descendant).

L'installation 300 permet à l'utilisateur de placer la box optique 310 dans une pièce 302 du logement (et non dans la gaine technique du logement 304), tout en bénéficiant pleinement de l'ensemble des services issus de la box (voix, données et images sur IP) sur chacun des modules émetteurs-récepteurs 308 du logement. De cette manière, l'utilisateur peut commander la box 310 et utiliser les fonctions propres à celle-ci (réinitialisation, accès au disque dur interne, arrêt des services de communication sans fil, tests, etc.).

Par ailleurs, comme dans le cas de l'installation 100 de la figure 5, l'installation 300 permet la diffusion de services tels que le téléphone filaire et la télévision numérique terrestre (TNT) ou satellite dans les différentes pièces 301 à 303 du logement.

Le coffret de brassage 306 a pour fonction de centraliser des services multimédia (téléphonie, télévision terrestre, télévision satellite, Ethernet, télévision sur Internet, etc.) en provenance de différents réseaux d'accès et de diffuser ces services dans les différentes pièces 301 à 303 du logement. A cet effet, le coffret de brassage 306 est raccordé d'une part à un réseau de communication externe (non-représenté) ainsi qu'à une antenne de télévision terrestre ou satellite (non-représentée), et d'autre part aux différentes prises de connexion 308 réparties dans les différentes pièces 301 à 303 du logement via les premiers ensembles conducteurs 3 des câbles 1. Chaque prise de connexion 308 permet le raccordement d'un appareil 316, 317 tel qu'un téléphone filaire, une télévision, un ordinateur ou tout équipement de communication fonctionnant sur la base d'un protocole d'échange de données Ethernet.

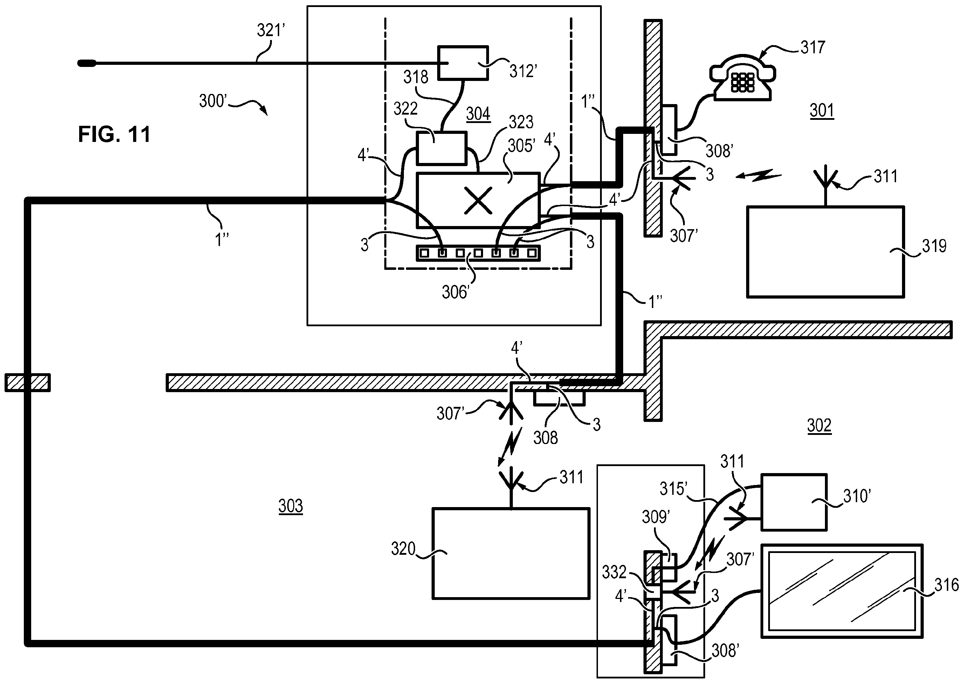

Dans une variante de réalisation, qui fait partie de l'invention, représentée sur la figure 11, l'installation 300' comprend un premier coupleur coaxial 312' (à la place du DTIO 312), un deuxième coupleur radiofréquence coaxial 322, un troisième coupleur coaxial 305' (à la place du coupleur optique 305), un quatrième coupleur coaxial 332, un coffret de brassage cuivre 306', une pluralité de câbles 1" conformes au câble de la figure 4 ou de la figure 5 (à la place des câbles 1 et 1'), une pluralité de modules émetteurs-récepteurs 307' et une pluralité de prises de connexion 308' répartis dans les différentes pièces 301 à 303 du logement.Le premier coupleur coaxial 312' est relié d'une part à un câble coaxial 321' d'un réseau de communication d'un opérateur s'étendant à l'extérieur du logement et d'autre part au deuxième coupleur coaxial 322 via un cordon coaxial 318.

Le deuxième coupleur coaxial 322 est relié au premier coupleur coaxial 312' via le cordon coaxial 318, au troisième coupleur 305' via un cordon coaxial 323 et au quatrième coupleur coaxial 332 via un ensemble coaxial 4' de l'un des câbles 1".

Le quatrième coupleur 332 est disposé à proximité de l'une des prises de connexion 308' dans l'une des pièces du logement 302.

Le quatrième coupleur 332 permet de raccorder l'ensemble coaxial 4' à la fois à la prise de connexion coaxiale 309' située dans la pièce 302 du logement et au module-émetteur-récepteur 307' situé dans la même pièce.

De cette manière, le modem-routeur coaxial 310' est raccordé à la fois au câble coaxial 321' d'un réseau de communication d'un opérateur et au coupleur radiofréquence coaxial 305' via le même ensemble conducteur coaxial 4' de l'un des câbles 1".

Le modem routeur d'abonné 310' reçoit des signaux radiofréquence en provenance du réseau câblé de l'opérateur via l'ensemble coaxial 4' du câble 1' dans une première bande de fréquence (typiquement 60 - 900 MHz) et renvoie les signaux reçus vers le module émetteur-récepteur 307' selon un protocole de communication sans fil dans une deuxième bande de fréquence (typiquement 2,4 - 2,5 GHz, 5 GHz ou 60 GHz).

Chaque module émetteur-récepteur 307' disposé dans une pièce 301, 302, 303 du logement est relié au coupleur coaxial 305' disposé dans la gaine technique du logement 304 via le deuxième ensemble conducteur 4' de l'un des câbles 1".

Le coupleur coaxial 305' a pour fonction d'assurer une liaison entre les deuxièmes ensembles conducteurs 4' des différents câbles 1" de l'installation 300', afin de transmettre des données d'un câble 1" à l'autre et de permettre des échanges de données entre plusieurs terminaux utilisateur 319 et 320.

Chaque module émetteur-récepteur 307' est configuré pour émettre les signaux de données radio-fréquence transmis par le deuxième ensemble conducteur 4' du câble 1" selon un protocole de communication sans fil vers un terminal utilisateur 319, 320 présent dans la pièce 301, 303. Le module émetteur-récepteur 307' est également configuré pour recevoir les signaux de données radio-fréquence émis par un terminal utilisateur 319, 320 selon un protocole de communication sans fil, et pour transmettre les signaux de données radio-fréquence par le deuxième ensemble conducteur du câble 1". A cet effet, chaque module émetteur-récepteur 307', 308' est raccordé au deuxième ensemble conducteur 4' du câble 1", le deuxième ensemble conducteur 4' étant utilisée à la fois pour transmettre des signaux de données du coupleur coaxial 305' vers le module émetteur-récepteur 307' (dans le sens montant) et du module émetteur-récepteur 307' vers le coupleur coaxial 305' (dans le sens descendant).

Par ailleurs, les câbles 1" relient les prises de connexion 308' au coffret de brassage 306' situé dans la gaine technique 304 du logement.

A cet effet, chaque prise de connexion 308' disposée dans une pièce 301, 302, 303 du logement est reliée au coffret de brassage coaxial 306' disposé dans la gaine technique du logement 304 via le premier ensemble conducteur 3 de l'un des câbles 1 ".

Le coffret de brassage 306' a pour fonction de centraliser des services multimédia (téléphonie, télévision terrestre, télévision satellite, Ethernet, télévision sur Internet, etc.) en provenance de différents réseaux d'accès et de diffuser ces services dans les différentes pièces 301 à 303 du logement. A cet effet, le coffret de brassage 306' est raccordé d'une part à un réseau de communication externe (non-représenté) ainsi qu'à une antenne de télévision terrestre ou satellite (non-représentée), et d'autre part aux différentes prises de connexion 308' réparties dans les différentes pièces 301 à 303 du logement via les premiers ensembles conducteurs 3 des câbles 1". Chaque prise de connexion 308' permet le raccordement d'un appareil 316, 317 tel qu'un téléphone filaire, une télévision, un ordinateur ou tout équipement de communication fonctionnant sur la base d'un protocole d'échange de données Ethernet.

Dans chacune des installations représentées sur les figures 6, 8, 9 et 11 il est possible de prévoir que les modules émetteur-récepteur 107, 107', 307 ou 307' soient alimentés en énergie électrique via le premier ensemble conducteur 3 des câbles 1 ou 1". Cela permet de télé-alimenter les modules émetteur-récepteur sans qu'il soit nécessaire de prévoir un raccordement indépendant de ces modules émetteur-récepteur à un réseau d'alimentation en énergie électrique séparé.

**Revendications**

1. Câble (1 ") pour réseau local comprenant :

   - un premier ensemble conducteur (3) comprenant entre deux et quatre paires (16) de conducteurs métalliques (5),
   - un deuxième ensemble conducteur coaxial (4') comprenant un conducteur métallique intérieur (23), une enveloppe en matériau diélectrique (24) entourant le conducteur métallique intérieur (23) et un conducteur métallique extérieur (25) entourant l'enveloppe en matériau diélectrique (24), et

- une gaine (2) entourant le premier ensemble conducteur (3) et le deuxième ensemble conducteur (4'),

**caractérisé en ce que** la gaine (2) comprend deux éléments de gaine (11, 12) séparables longitudinalement de manière à autoriser un raccordement indépendant du premier ensemble conducteur (3) et du deuxième ensemble conducteur (4').

2. Câble (1") selon la revendication 1, dans lequel le premier ensemble conducteur (3) est dépourvu d'enveloppes de blindage entourant les paires (16) individuellement.

3. Câble (1") selon l'une des revendications 1 et 2, dans lequel le premier ensemble conducteur (3) est dépourvu d'une enveloppe d'écrantage (18) entourant l'ensemble des paires (16) de conducteurs métalliques du premier ensemble conducteur (3).

4. Installation (100', 300') de réseau local, comprenant :

   - un coupleur coaxial (105', 305') radio-fréquence,
   - une pluralité de modules émetteurs-récepteurs (107', 307') destinés à être répartis en différents lieux (101-103, 301-303) dans un bâtiment,
   - une pluralité de câbles (1 ") conformes à l'une des revendications 1 à 3"

   chaque câble (1") reliant le coupleur coaxial (105', 305') radiofréquence à l'un des modules émetteurs-récepteurs (107', 307') via le deuxième ensemble conducteur (4') du câble (1 "),
   chaque module émetteur-récepteur (107', 307') étant adapté pour émettre selon un protocole de communication sans fil vers des terminaux utilisateurs (109, 110, 319, 320) présents dans le bâtiment, des signaux de données transmis par le deuxième ensemble conducteur (4'), et transmettre par le deuxième ensemble conducteur (4') des signaux de données reçus depuis les terminaux utilisateurs (109, 110, 319, 320) selon un protocole de communication sans fil.

5. Installation selon la revendication 4, comprenant un coffret de brassage (106', 306') et une pluralité de prises de raccordement (108', 308') réparties dans le bâtiment, chaque câble (1") reliant le coffret de brassage (106', 306') à l'une des prises de raccordement (108', 308') via le premier ensemble conducteur (3) du câble (1 ").

6. Installation selon l'une des revendications 4 et 5, comprenant en outre :

   - un modem routeur d'abonné (310') destiné à être disposé dans une pièce (302) du logement et adapté pour recevoir des signaux radiofréquence en provenance d'un réseau câblé (321') d'un opérateur via l'ensemble conducteur coaxial (4') du câble (1") dans une première bande de fréquence et pour renvoyer les signaux reçus via l'ensemble conducteur coaxial (4') du même câble (1") dans une deuxième bande de fréquence vers le coupleur coaxial (305') pour diffusion vers la pluralité de modules émetteurs-récepteurs (307').

7. Installation selon l'une des revendications 4 à 6, dans laquelle le premier ensemble conducteur (3) comprend une enveloppe de blindage (6, 17) entourant les conducteurs métalliques (5).

8. Installation selon l'une des revendications 4 à 7, dans laquelle la gaine comprend un premier élément de gaine (11) entourant une première cavité (13) et un deuxième élément de gaine (12) entourant une deuxième cavité (14), le premier ensemble conducteur (3) s'étendant à l'intérieur de la première cavité (13) et le deuxième ensemble conducteur (4') s'étendant à l'intérieur de la deuxième cavité (14).

9. Installation selon l'une des revendications 4 à 8, dans laquelle chaque module émetteur-récepteur (107', 307') est adapté pour être alimenté en énergie électrique via le premier ensemble conducteur (3).

10. Utilisation d'un câble (1 ") comprenant :

    - un premier ensemble conducteur (3) comprenant au moins deux conducteurs métalliques (5),
    - un deuxième ensemble conducteur (4') comprenant un ensemble conducteur coaxial, et
    - une gaine (2) entourant le premier ensemble conducteur (3) et le deuxième ensemble conducteur (4'), et comprenant deux éléments de gaine (11, 12) séparables longitudinalement de manière à autoriser un raccordement indépendant du premier ensemble conducteur (3) et du deuxième ensemble conducteur (4'),

    pour relier un coupleur (105', 305') radio-fréquence à un module émetteur-récepteur (107', 307') dans une installation de réseau local conforme à l'une des revendications 4 à 9.

11. Installation (200') de réseau résidentiel comprenant :

    - un coffret de brassage (206') destiné à être disposé dans une gaine technique (204) d'un logement,
- un modem routeur d'abonné (210') destiné à être disposé dans une pièce (202) du logement et adapté pour recevoir des signaux de données qu'il reçoit en provenance d'un réseau coaxial (211') d'un opérateur et pour renvoyer les signaux de données vers le coffret de brassage,
- une pluralité de prises de connexion (207'-209') destinées à être réparties dans différentes pièces (201-203) du logement et adaptées pour être raccordées à des appareils de diffusion multimédia (218, 219),
- une pluralité de câbles de transmission (1"), incluant un câble de transmission (1") reliant le coffret de brassage (206') au modem routeur d'abonné (210'), et des câbles de transmission (1") reliant le coffret de brassage (206') aux prises de connexion (207'-209'),

dans lequel le câble de transmission (1") reliant le coffret de brassage (206') au modem routeur d'abonné (210') est conforme à l'une des revendications 1 à 3.

12. Installation selon la revendication 11, dans laquelle le premier ensemble conducteur (3) comprend quatre conducteurs métalliques (5) adaptés pour transmettre les signaux de données électriques vers le coffret de brassage (206') pour transmission des signaux vers les différentes prises de connexion (207'-209'), et le deuxième ensemble conducteur coaxial (4') est adapté pour transmettre les signaux de données en provenance du réseau coaxial (211') vers le modem routeur d'abonné (210')

13. Installation selon la revendication 12, comprenant en outre une prise de connexion hybride (208') comprenant un connecteur coaxial (213') pour le raccordement du modem routeur d'abonné (210') à l'ensemble coaxial du câble (1") et un connecteur électrique (214') pour le raccordement du modem routeur d'abonné (210') aux quatre conducteurs métalliques (5).

14. Installation selon l'une des revendications 11 à 13, dans laquelle le câble de transmission (1") reliant le coffret de brassage (206') au modem routeur d'abonné (210') comprend une gaine (2) comprenant un premier élément de gaine (11) entourant une première cavité (13) et un deuxième élément de gaine (12) entourant une deuxième cavité (14), le premier ensemble conducteur (3) s'étend à l'intérieur de la première cavité (13), le deuxième ensemble conducteur (4') s'étend à l'intérieur de la deuxième cavité (14).

15. Installation selon l'une des revendications 11 à 14, dans laquelle les conducteurs métalliques (5) sont torsadés ensemble par paires (16).

**Patentansprüche**

1. Kabel (1") für lokales Netz, das Folgendes umfasst:

   - eine erste Leiterbaugruppe (3), die zwischen zwei und vier Paare (16) von metallischen Leitern (5) umfasst,
   - eine zweite Koaxialleiter-Baugruppe (4'), die einen metallischen Innenleiter (23), einen Mantel (24) aus dielektrischem Material, der den metallischen Innenleiter (23) umgibt, und einen metallischen Außenleiter (25) umfasst, der den Mantel aus dielektrischem Material (24) umgibt, und
   - eine Hülle (2), die die erste Leiterbaugruppe (3) und die zweite Leiterbaugruppe (4') umgibt,

   **dadurch gekennzeichnet, dass** die Hülle (2) zwei Hüllenelemente (11, 12) umfasst, die in Längsrichtung getrennt werden können, derart, dass ein unabhängiger Anschluss der ersten Leiterbaugruppe (3) und der zweiten Leiterbaugruppe (4') ermöglicht wird.

2. Kabel (1") nach Anspruch 1, wobei die erste Leiterbaugruppe (3) keine Bewehrungsmäntel aufweist, die die Paare (16) einzeln umgeben.

3. Kabel (1") nach einem der Ansprüche 1 und 2, wobei die erste Leiterbaugruppe (3) keinen Abschirmungsmantel (18) aufweist, der die Baugruppe aus Paaren (16) von metallischen Leitern der ersten Leiterbaugruppe (3) umgibt.

4. Anlage (100', 300') für lokales Netz, die Folgendes umfasst:

   - einen Hochfrequenz-Koaxialkoppler (105', 305'),
   - mehrere Sende/Empfangsmodule (107', 307'), die dazu bestimmt sind, an verschiedenen Orten (101-103, 301-303) in einem Gebäude verteilt zu werden,
   - mehrere Kabel (1") nach einem der Ansprüche 1 bis 3,

   wobei jedes Kabel (1") den Hochfrequenz-Koaxialkoppler (105', 305') mit einem der Sende/Empfangsmodule (107', 307') über die zweite Leiterbaugruppe (4') des Kabels (1") verbindet,
   wobei jedes Sende/Empfangsmodul (107', 307') angepasst ist, um gemäß einem Protokoll zur drahtlosen Kommunikation an Benutzerendgeräte (109, 110, 319, 320), die in dem Gebäude vorhanden sind, Datensignale zu senden, die durch die zweite Leiterbaugruppe (4') übertragen werden, und durch die zweite Leiterbaugruppe (4') Datensignale, die von den Benutzerendgeräten (109, 110, 319, 320) empfangen werden, gemäß einem Protokoll zur drahtlosen Kommunikation zu übertragen.

**5.** Anlage nach Anspruch 4, die einen Verteilerkasten (106', 306') und mehrere Anschlussdosen (108', 308') umfasst, die im Gebäude verteilt sind, wobei jedes Kabel (1") den Verteilerkasten (106', 306') mit einer der Anschlussdosen (108', 308') über die erste Leiterbaugruppe (3) des Kabels (1") verbindet.

**6.** Anlage nach einem der Ansprüche 4 und 5, die ferner Folgendes umfasst:

- ein Teilnehmer-Router-Modem (310'), das dazu bestimmt ist, in einem Raum (302) der Wohnung angeordnet zu sein, und angepasst ist, um Hochfrequenzsignale, die von einem Kabelnetz (321') eines Anbieters stammen, über die Koaxialleiter-Baugruppe (4') des Kabels (1") in einem ersten Frequenzband zu empfangen und um die empfangenen Signale über die Koaxialleiter-Baugruppe (4') desselben Kabels (1") in einem zweiten Frequenzband an den Koaxialkoppler (305') zur Verbreitung an die mehreren Sende/Empfangsmodle (307') weiter zu senden.

**7.** Anlage nach einem der Ansprüche 4 bis 6, wobei die erste Leiterbaugruppe (3) einen Bewehrungsmantel (6, 17) umfasst, der die metallischen Leiter (5) umgibt.

**8.** Anlage nach einem der Ansprüche 4 bis 7, wobei die Hülle ein erstes Hüllenelement (11), das einen ersten Hohlraum (13) umgibt, und ein zweites Hüllenelement (12) umfasst, das einen zweiten Hohlraum (14) umgibt, wobei die erste Leiterbaugruppe (3) sich im Inneren des ersten Hohlraums (13) erstreckt und die zweite Leiterbaugruppe (4') sich im Inneren des zweiten Hohlraums (14) erstreckt.

**9.** Anlage nach einem der Ansprüche 4 bis 8, wobei jedes Sende/Empfangsmodul (107', 307') angepasst ist, um über die erste Leiterbaugruppe (3) mit elektrischer Energie versorgt zu werden.

**10.** Verwendung eines Kabels (1"), das Folgendes umfasst:

- eine erste Leiterbaugruppe (3), die mindestens zwei metallische Leiter (5) umfasst,
- eine zweite Leiterbaugruppe (4'), die eine Koaxialleiter-Baugruppe umfasst, und
- eine Hülle (2), die die erste Leiterbaugruppe (3) und die zweite Leiterbaugruppe (4') umgibt und zwei Hüllenelemente (11, 12) umfasst, die in Längsrichtung getrennt werden können, derart, dass ein unabhängiger Anschluss der ersten Leiterbaugruppe (3) und der zweiten Leiterbaugruppe (4') ermöglicht wird,

um einen Hochfrequenzkoppler (105', 305') mit einem Sende/Empfangsmodul (107', 307') in einer lokalen Netzanlage nach einem der Ansprüche 4 bis 9 zu verbinden.

**11.** Heimnetzwerkanlage (200'), die Folgendes umfasst:

- einen Verteilerkasten (206'), der dazu bestimmt ist, in einer technische Hülle (204) einer Wohnung angeordnet zu werden,
- ein Teilnehmer-Router-Modem (210'), das dazu bestimmt ist, in einem Raum (202) der Wohnung angeordnet zu werden, und angepasst ist, um Datensignale zu empfangen, die es von einem Koaxialnetz (211') eines Anbieters stammend empfängt, und um die Datensignale an den Verteilerkasten weiter zu senden,
- mehrere Verbindungsdosen (207'-209'), die dazu bestimmt sind, in verschiedenen Räumen (201-203) der Wohnung verteilt zu werden, und angepasst sind, um an Multimedia-Verbreitungsvorrichtungen (218, 219) angeschlossen zu werden,
- mehrere Übertragungskabel (11'''), die ein Übertragungskabel (1"), das den Verteilerkasten (206') mit dem Teilnehmer-Router-Modem (210') verbindet, und Übertragungskabel (1") umfassen, die den Verteilerkasten (206') mit den Verbindungsdosen (207'-209') verbinden,

wobei das Übertragungskabel (1"), das den Verteilerkasten (206') mit dem Teilnehmer-Router-Modem (210') verbindet, nach einem der Ansprüche 1 bis 3 ist.

**12.** Anlage nach Anspruch 11, wobei die erste Leiterbaugruppe (3) vier metallische Leiter (5) umfasst, die angepasst sind, um die elektrischen Datensignale an den Verteilerkasten (206') zur Übertragung der Signale an die verschiedenen Verbindungsdosen (207'-209') zu übertragen, und die zweite Koaxialleiter-Baugruppe (4') angepasst ist, um die Datensignale, die von dem Koaxialnetz (211') stammen, an das Teilnehmer-Router-Modem (210') zu übertragen.

**13.** Anlage nach Anspruch 12, die ferner eine hybride Verbindungsdose (208') umfasst, die einen Koaxialleiter (213') für den Anschluss des Teilnehmer-Router-Modems (210') an die Koaxialbaugruppe des Kabels (1") und einen elektrischen Leiter (214') für den Anschluss des Teilnehmer-Router-Modems (210')
an die vier metallischen Leiter (5) umfasst.

**14.** Anlage nach einem der Ansprüche 11 bis 13, wobei
das Übertragungskabel (1"), das den Verteilerkasten (206') mit dem Teilnehmer-Router-Modem (210')
verbindet, eine Hülle (2) umfasst, die ein erstes Hüllenelement (11), das einen ersten Hohlraum (13)
umgibt, und ein zweites Hüllenelement (12) umfasst,
das einen zweiten Hohlraum (14) umgibt, wobei die
erste Leiterbaugruppe (3) sich im Inneren des ersten
Hohlraums (13) erstreckt und die zweite Leiterbaugruppe (4') sich im Inneren des zweiten Hohlraums
(14) erstreckt.

**15.** Anlage nach einem der Ansprüche 11 bis 14, wobei
die metallischen Leiter (5) paarweise (16) zusammen verdrillt sind.

**Claims**

**1.** A cable (1") for a local network comprising:

   - a first conductive assembly (3) comprising between two and four pairs (16) of metal conductors (5),
   - a second coaxial conductive assembly (4')
   comprising an inner metal conductor (23), an
   envelope in a dielectric material (24) surrounding the inner metal conductor (23) and an outer
   metal conductor (25) surrounding the envelope
   in a dielectric material (24), and
   - a sheath (2) surrounding the first conductive
   assembly (3) and the second conductive assembly (4'),

   **characterized in that** the sheath (2) comprises two
   longitudinally separable sheath elements (11, 12) so
   as to allow an independent connection of the first
   conductive assembly (3) and of the second conductive assembly (4').

**2.** The cable (1") according to claim 1, wherein the first
conductive assembly (3) is without any shielding casings surrounding the pairs (16) individually.

**3.** The cable (1") according to one of claims 1 and 2,
wherein the first conductive assembly (3) is without
any screening casing (18) surrounding the whole of
the pairs (16) of metal conductors of the first conductive assembly (3).

**4.** A local network facility (100', 300'), comprising:

   - a coaxial radiofrequency coupler (105', 305'),
   - a plurality of transceiver modules (107', 307')
   intended to be distributed in different locations (101-103, 301-303) in a building,
   - a plurality of cables (1") according to one of
   claims 1 to 3,

each cable (1") connecting the coaxial radiofrequency coupler (105', 305') to one of the transceiver modules (107', 307') via the second conductive assembly
(4') of the cable (1"),
each transceiver module (107', 307') being adapted
for emitting according to a wireless communication
procedure towards user terminals (109, 110, 319,
320) present in the building, data signals transmitted
by the second conductive assembly (4'), and transmitting by the second conductive assembly (4') data
signals received from the user terminals (109, 110,
319, 320) according to a wireless communication
procedure.

**5.** The facility according to claim 4, comprising a mixing
box (106', 306') and a plurality of connection outlets
(108', 308') distributed in the building, each cable
(1") connecting the mixing box (106', 306') to one of
the connection outlets (108', 308') via the first conductive assembly (3) of the cable (1").

**6.** The facility according to one of claims 4 and 5, further
comprising:

   - a subscriber router modem (310') intended to
   be positioned in a room (302) of the dwelling and
   adapted for receiving radiofrequency signals
   from a cabled network (321') of an operator via
   the coaxial conductive assembly (4') of the cable
   (1") in a first frequency band and for sending
   back the received signals via the coaxial conductive assembly (4') of the same cable (1") in
   a second frequency band towards the coaxial
   coupler (305') for broadcasting to the plurality of
   transceiver modules (307').

**7.** The facility according to one of claims 4 to 6, wherein
the first conductive assembly (3) comprises a shielding envelope (6, 17) surrounding the metal conductors (5).

**8.** The facility according to one of claims 4 to 7, wherein
the sheath comprises a first sheath element (11) surrounding a first cavity (13) and a second sheath element (12) surrounding a second cavity (14), the first
conductive assembly (3) extending inside the first
cavity (13) and the second conductive assembly (4')
extending inside the second cavity (14).

**9.** The facility according to one of claims 4 to 8, wherein
each transceiver module (107', 307') is adapted for
being supplied with electrical energy via the first conductive assembly (3).

**10.** Use of a cable (1") comprising:

- a first conductive assembly (3) comprising at least two metal conductors (5),
- a second conductive assembly (4') comprising a coaxial conductive assembly, and
- a sheath (2) surrounding the first conductive assembly (3) and the second conductive assembly (4'), and comprising two longitudinally separable sheath elements (11, 12) so as to allow an independent connection of the first conductive assembly (3) and of the second conductive assembly (4'),

for connecting a radiofrequency coupler (105', 305') to a transceiver module (107', 307') in a local network facility according to one of claims 4 to 9.

**11.** A residential network facility (200') comprising:

- a mixing box (206') intended to be positioned in a technical sheath (204) of a dwelling,
- a subscriber router modem (210') intended to be positioned in a room (202) of the dwelling and adapted for receiving data signals which it receives from a coaxial network (211') of an operator and for sending back the data signals to the mixing box,
- a plurality of connection outlets (207'-209') intended to be distributed in different rooms (201-203) of the dwelling and adapted for being connected to multimedia broadcasting devices (218, 219),
- a plurality of transmission cables (1"), including a transmission cable (1") connecting the mixing box (206') to the subscriber router modem (210'), and transmission cables (1") connecting the mixing box (206') to the connection outlets (207'-209'),

wherein the transmission cable (1") connecting the mixing box (206') to the subscriber router modem (210') is according to one of claims 1 to 3.

**12.** The facility according to claim 11, wherein the first conductive assembly (3) comprises four metal conductors (5) adapted for transmitting electric data signals to the mixing box (206') for transmitting signals to the different connection outlets (207'-209'), and the second conductive assembly (4') is adapted for transmitting the data signals from the coaxial network (211') to the subscriber router modem (210').

**13.** The facility according to claim 12, further comprising a hybrid connection outlet (208') comprising a coaxial connector (213') for connecting the subscriber router modem (210') to the coaxial assembly of the cable (1") and an electric connector (214') for connecting the subscriber router modem (210') to the four metal conductors (5).

**14.** The facility according to one of claims 11 to 13, wherein the transmission cable (1") connecting the mixing box (206') to the subscriber router modem (210') comprises a sheath (2) comprising a first sheath element (11) surrounding a first cavity (13) and a second sheath element (12) surrounding a second cavity (14), the first conductive assembly (3) extending inside the first cavity (13), the second conductive assembly (4') extending inside the second cavity (14).

**15.** The facility according to one of claims 11 to 14, wherein the metal conductors (5) are twisted together pairwise (16).

# FIG. 1

# FIG. 2

# FIG. 3

## FIG. 4

## FIG. 5

FIG. 6

100

101

102

103

104

105

106

107

108

109

110

111

112

113

114

115

116

1

3

4

FIG. 7

EP 2 966 653 B1

FIG. 8

FIG. 9

FIG. 10

FIG. 11

EP 2 966 653 B1

**EP 2 966 653 B1**

## RÉFÉRENCES CITÉES DANS LA DESCRIPTION

**Documents brevets cités dans la description**

- GB 2244848 A